# EUROPEAN PATENT APPLICATION

(11) **EP 2 026 514 A1**
(43) Date of publication of application: **18.02.2009**
(21) Application number: 07425527.4
(22) Date of filing: 14.08.2007
(51) Int. Cl.: H04L 12/56

(54) **Resource management method for multi acces networks**

(71) Applicant: Nokia Siemens Networks S.p.A., 20126 Milano (IT); Nokia Siemens Networks Oy, 02610 Espoo (FI)
(72) Inventor: Cavalli, Simona, 21027 Ispra (VA) (IT); Meago, Francesco, 23100 Sondrio (IT)

(57) **Abstract**

Every controller (RNC, BSC, E-NodeB, BS) of multi-RAT PLMN (UTRAN, GERAN, LTE, WiMAX) calculates for each controlled cell a MUB IE describing the availability of transport services in terms of maximum user bitrate that can currently be allowed to each transport service, separately for UL and DL, needed to plan usage of radio resources in the current and neighbouring cells, such as for handovers, cell reselections and new service setups. The MUB computation avails of:
-calculating an available capacity for a given service by taking a normalised capacity accessible to said service and by subtracting to it a normalized load of said service and of any other service that cannot be pre-empted by said service;
-calculating the MUBN for said service as the minimum between said available capacity and the maximum capacity MAXUB allowed to the single user for said service as a configuration setting;
-calculating a quantized representation MUB of the MUBN for said service as the nearest power of two raised at an integer n.

The MUB is included into management messages forwarded to the other controllers, either of the same or different technologies. Every controller checks the received MUB coming from the other controllers in order to decide on the most suited target cell, among the current and neighbouring cells, for resource management issues such as handover, cell reselection, and new service setup (fig.6).

## Description

### FIELD OF THE INVENTION

The present invention relates to the so-called Ambient Networks (AN), and in particular to a resource management method for multi-access networks. (Used acronyms description and bibliographic references are given at the end of the description).

### BACKGROUND ART

The communications industry has a truly historic opportunity over the coming years to connect the majority of the world using mobile, wireless broadband and fixed broadband systems. As a result, in 2015 we will live in a world, in which five billion people are connected, most of them 'always on' with a broadband connection. People can use the services they want anytime, anywhere with their preferred devices.

The Internet will be the dominant platform to connect these five billion people and their various devices with each other, and to provide access to a great variety of content and applications. Mobility will dominate in voice services with 70-90% of all traffic, depending on the market.

Broadband IP connections will be available practically anywhere in the world, across developed and growth markets. A combination of mobile, wireless and fixed systems will ensure global coverage, full mobility and adequate speed and capacity. In the growth markets mobile and wireless broadband will play a crucial role in broadband coverage.

In the converged telecom, Internet, media and IT landscape there will be a much larger variety of services providers and business models compared to today's telecom environment. Each provider will compete in a larger market than traditionally seen, creating both a huge opportunity and increased competition.

Taking into account said converged landscape, future internetworking will continue to signify "the interaction of heterogeneous networks", today including cellular, wireless and wire-line networks, public and private, belonging to users and operators. In this context the Ambient Networks project (see Ref. [1], [2], and [3] at the end) works for specifying a system capable to handle future internetworking by enabling dynamic composition of networks and establishment of inter-network agreements, coexistence of multiple access technologies, multi-operator and multi-hop functions, mobility and security support. The vision for multi-access operations is characterized by heterogeneous access technologies, radio or fixed, through which data may flow in series (multi-hop) or in parallel, alternatively or concurrently.

To enable multi-access operations, efficient resource management methods need to consider the diverse characteristics of the heterogeneous access technologies. This translates into the need to identify how the dissimilar access resources should be abstracted in order to provide the most suited building block for resource management operations, optimizing the trade-off between performance of the adopted resource management schemes, and cost of signalling and processing as contextualized in today's technologies. Started in January 2004 as part of the IST 6th Framework Programme of the European Union, the Ambient Networks project is developing a new networking environment providing thorough inter-working among today's networks, characterized by their diverse features and services. The objectives include enabling the emergence of new businesses, as well as stimulating continuous growth in the communication market.

Ambient Networks described in Ref.[3] realizes its objectives through the definition of a new network convergence layer, the "Ambient Control Space" (ACS), as a control stratum typically referred to as an overlay, where the envisaged Ambient Networks functionality is introduced. Open implementation options exist how this networking realm should be realized, while the main interfaces are under specification process.

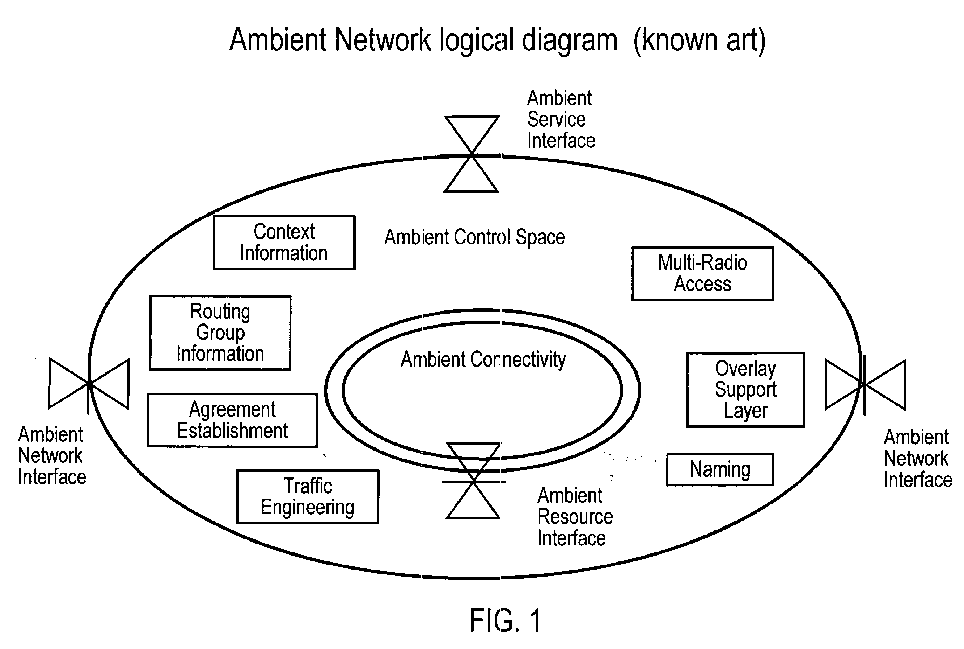

**Fig.1** schematizes a typical Ambient Network (AN) scenario characterised by the ACS as a control plane, and an Ambient Connectivity (ACY) functionality. The ACS includes a number of functionalities capable of managing Multi-radio Access, Context information, mobility, security and even more. The ACS includes interfaces towards the higher layers of control functionality, such as user applications through the Ambient Service Interface (ASI), and also includes Ambient Resource Interfaces (ARI) towards the ACY, i.e. the lower layers of control functionality. ANs and their respective ACSs interact through the ANI. ASI, ARI and ANI are logical interfaces that may run over heterogeneous communication means and access technologies.

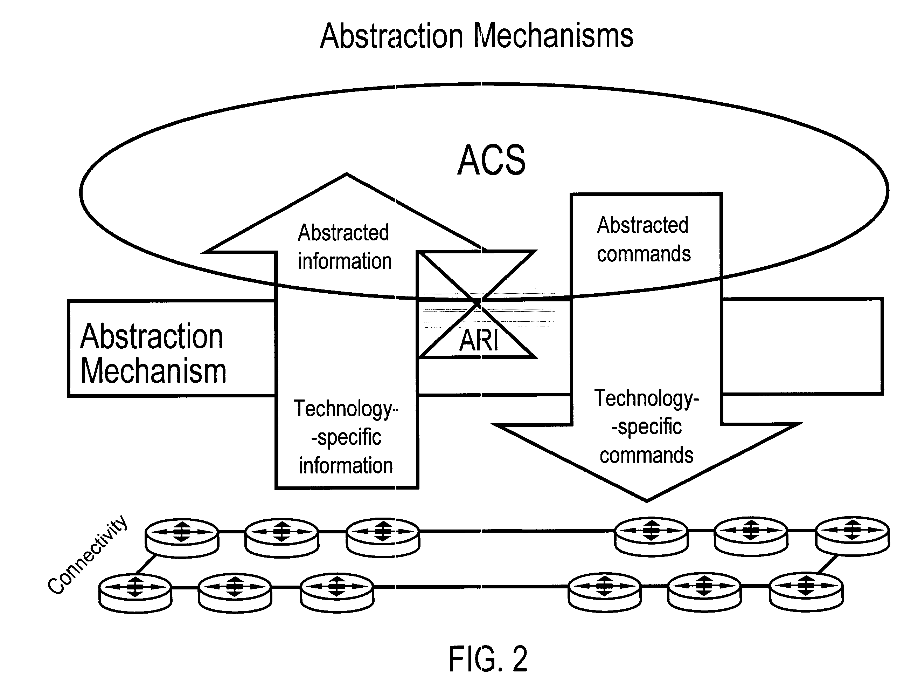

The issue of multi-access in the ACS described in Ref.[4] mainly refers to criteria how resource management may handle communication paths of diverse access technology both in series and in parallel, alternatively or concurrently. For solving this issue, it is of primary importance to identify suitable abstractions of the access resource through which the ACS can view and control the "Ambient Connectivity" layers, where technology-specific communication paths are accessible via the "Ambient Resource Interface" (ARI). **Fig.2** schematizes a process involving both ACS and Ambient connectivity in which technology-specific information needs to be abstracted up to a level and to a type that allows provisioning the envisaged multi-access operations in the ACS through respective algorithms. To this aim, "Abstracted (load) information" is defined as a more generic type of information, typically technology-independent, or quasi-technology-independent, obtained by transformation through algorithms (abstraction layer algorithms) from a technology specific information. The goal is therefore not only defining the most suitable abstractions, but also providing the related mechanisms and algorithms for the technology-specific Abstraction Layers, together with the related access selection and admission control algorithms for the ACS.

Cell Capacity/load abstractions have been suggested up to now within discussions around load balancing in 3GPP for achieving a timely specification enabling some coordination between RNCs and BSCs. Cell load is a measurement typically easy to retrieve from parameters like total transmitted power, interference, number of occupied timeslots, etc.

"Transport Service Availability" (TSA) abstraction, limitedly to the bearer service, is disclosed in Patent application EP-A1-1503606 of the same inventors, which describes: a common radio resource management method in a mobile radio communication network employing different radio access technologies that overlap over a geographic area subdivided into cells belonging to the domains of respective controllers which are connected to each other in overlapping or adjacent domains and to a core network by means of relevant interfaces, suitable to be carried out for each controlled cell by the respective controller through the steps of:
- starting from acquired information about QoS and throughput of all the active connections with the served mobile terminals (UE/MS), calculating traffic-related Information Elements, separately for uplink and downlink, needed to plan handovers and/or cell reselections; said traffic-related Information Elements including indications of the availability of bearer services in the cell in terms of maximum bitrate, either guaranteed or not guaranteed, that can currently be allowed to each bearer service, said bearer service being distinguished by traffic class due to the different QoS characteristics of the bearer services in terms of Eb/No, error rates, priorities, and delay;
- including said traffic-related Information Elements in management messages forwarded to the controllers of different cells to the one in turn considered, either of the same or different technologies;
- checking said traffic-related Information Elements coming from the other controllers (BSC, RNC) in order to decide either of issuing or preventing handovers and/or cell reselection commands towards a neighbouring cell.

### OUTLINED TECHNICAL PROBLEM

The teaching of the aforementioned document EP-A1-1503606 was only directed to announce the Bearer Service Availability as an exemplary abstraction based on Transport Service, but none other than reference to generic tables it is said of how calculating the Bearer Service Availability, so it is not currently known how to produce Transport Service Availability information elements. Without an effective criterion of how calculating said TSA, the access network controllers originating the information cannot "forecast" the outcome of the resident admission control algorithms for the specific service to be admitted.

### OBJECT AND SUMMARY OF THE INVENTION

The main object of the present invention is that to overcome the lack of a clear teaching in the prior art of how calculating a transport service availability information element.

The invention achieves said object by providing a radio resource management method in a mobile radio communication network employing different radio access technologies, e.g.: UTRAN, GERAN, LTE, WiMAX, that overlap over a geographic area subdivided into cells belonging to the domains of respective controllers (RNC, BSC, E-NodeB, BS), including the following steps carried out by every controller for each controlled cell:
a) calculating a transport service availability information element, called hereafter MUB, describing the availability of transport services in terms of maximum user bitrate that can currently be allowed to each transport service, separately for uplink and downlink, needed to plan usage of radio resources in the current and neighbouring cells, such as for handovers, cell reselections and new service setups; the computation at step a) including at least the following substeps executed for each implemented service characterised by service type and high/low priority:
   a1) calculating an available capacity for a given service by taking a normalised capacity accessible to said service and by subtracting to it a normalized load of said service and of any other service that cannot be pre-empted by said service;
   a2) calculating the MUBN for said service as the minimum between said available capacity and the maximum capacity MAXUB allowed to the single user for said service as a configuration setting;
   a3) calculating a quantized representation MUB of the MUBN for said service for transmission over digital transmission means;
b) including said MUB information elements calculated as above into management messages forwarded to the other controllers, either of the same or different technologies;
c) checking said MUB information elements coming from the other controllers (BSC, RNC, E-NodeB, BS) in order to decide on the most suited target cell, among the current and neighbouring cells, for resource management issues such as handover, cell reselection, and new service setup, as described in claim 1.

Details on the calculation and other aspects of the invention are described in the dependent claims.

A radio resource management method which avails of the precise teaching of how calculating TSA information according to the present invention, constitutes an effective improvement of the access selection and admission control algorithms in the control space of the Ambient Networks.

The smartness of the method has been tested by means of a comparative emulation applied to a GSM access network between TSA Abstraction Layer Information (ALI) calculated according to the method of the invention and 3GPP ALI based on Cell capacity/load. To the only aim of the emulation, some algorithms have been appositely developed also for calculating 3GPP (GSM) ALI and successively using it in evaluating some selection criteria of target cells for a given service.

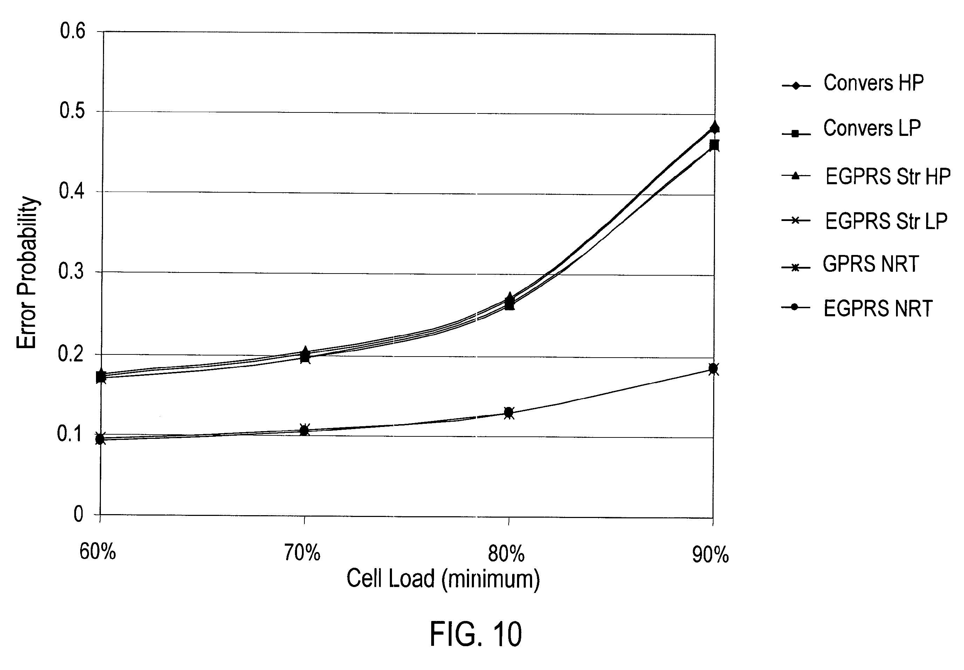

Finally, a comparative algorithm between performances of two types of ALI has been developed for calculating the admission control error probability versus minimum cell load using 3GPP ALI instead of TSA ALI in emulating a GSM scenario characterized by a single target cell. The outcome of the comparative algorithm is the bunch of error curves reported in **fig.10** which clearly attests the superiority of TSA ALI calculated according to the method of the invention: typically, gains are higher for higher cell load, i.e. in the most critical situations.

### BRIEF DESCRIPTION OF THE DRAWINGS

The invention and its advantages may be understood with reference to the following detailed description of an embodiment thereof taken in conjunction with the accompanying drawings given for purely non-limiting explanatory purposes and wherein:
- **fig.1** shows an Ambient Control Space and Connectivity diagram of the so-called Ambient Networks;
- **fig.2** schematized the mechanisms involved with the abstraction paradigm used at the ARI interface between ACS and Connectivity of fig.1;
- **fig.3** shows a known diagram of a Multi-RAT (GSM + 3G) PLMN as an exemplary scenario of Ambient Network;
- **fig.4** shows a very general diagram of the exchange of TSA Abstracted Load Information (ALI) calculated according to the method of the present invention, between a GSM controller and another Access Controller which performs TSA-based evaluation algorithms for traffic planning inside the network of fig.3;
- **fig.5** shows a very general diagram which differs from the previous one for the additional exchange of traditional 3GPP ALI based on capacity /load, so at the other Access Controller two evaluation algorithms for access selection can be compared to each other in order to calculate the evaluation error of the 3GPP ALI approach in respect of more correct evaluations performed by the algorithm which makes use of TSA ALI calculated according to the method of the invention;
- **fig.6** is the most general flow chart of GSM abstraction layer for computation of TSA ALI and concurrent execution of TSA ALI evaluation for admission control according to the method of the invention;
- **figures 7****,** **8, and 9** are flow charts relevant to corresponding steps of the flow chart of fig.6;
- **fig.10** shows a bunch of 3GPP ALI error curves versus minimum cell load (plotted for various services) in taking cell selection decisions comparatively based on both 3GPP ALI and TSA ALI, when the GSM scenario of fig.5 is emulated limitedly to a single target cell;
- **fig.11** shows an evolution of the Multi-RAT PLMN depicted in fig.3 as a future candidate to host the present invention;
- **fig.12** shows a diagram of inter E-Node B communication according to 3GPP Long Term Evolution (LTE) Access Network as another candidate to host the present invention;
- **fig.13** shows a similar diagram for a WiMAX Access Network as still another candidate to host the present invention.

### DETAILED DESCRIPTION OF AN EMBODIMENT OF THE INVENTION

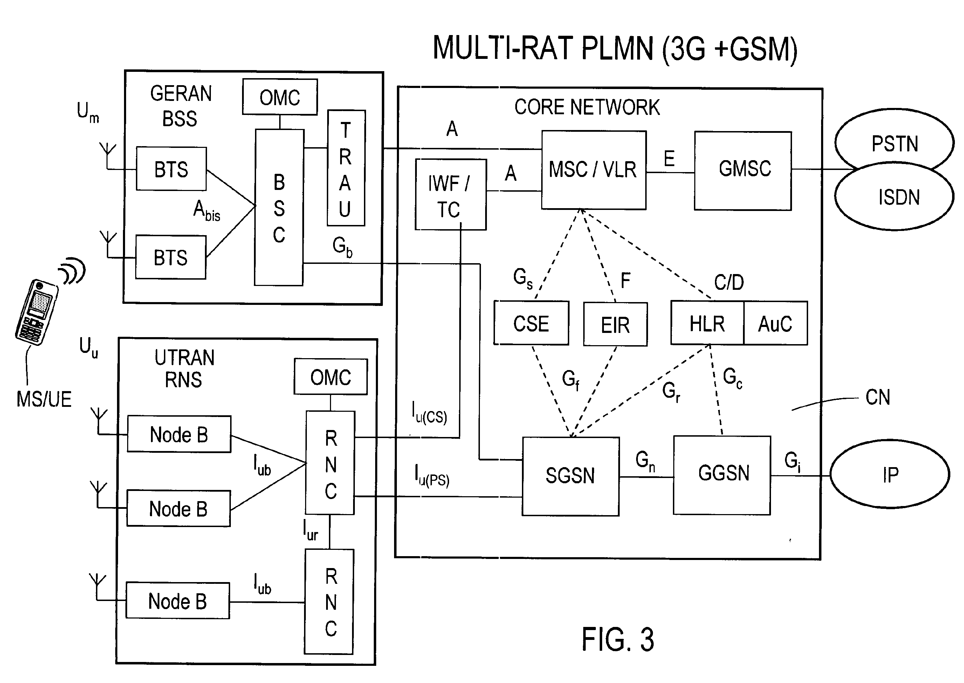

**Fig.3** shows a multi-RAT (Radio Access Technology) PLMN that will be soon completed in Europe. The new Universal Mobile Telecommunications System (UMTS) shares the existing GSM (Global System for Mobile communications) Core Network CN with the GPRS service. Relevant GSM RAN (Radio Access Network) in fig.3 is the so-called GERAN (GSM EDGE RAN), corresponding to the ultimate GSM RAN based on new EDGE (Enhanced Data rates for GSM Evolution) techniques that allow higher data rates in GSM, e.g. higher modulations. The Core Network CN is connected to one or more BSS (Base Station Subsystem) of the GSM, and to one or more RNS (Radio Network Subsystem) of an UTRAN (Universal Terrestrial Radio Access Network). The UMTS system of fig.3 is described in the TS 23.002 (CN) and TS 25.401 (UTRAN). Both the UTRAN and BSS are connected, on air, to a plurality of User Equipment UE/MS, each including a Mobile Equipment ME with a respective USIM card (UMTS Subscriber Identity Module). The present invention applies to UEs of single but preferably multistandard type: so that they are indicated as UE/MS (without limitation, often the only term UE is indicated). The UTRAN includes a plurality of Node B blocks each connected to a respective Radio Network Controller RNC by means of an lub interface. A node B includes a Base Transceiver Station BTS connected to the UEs through an on-air Uu interface. The upper RNC is a Serving S-RNC connected to the Core Network CN by means of a first lu(CS) interface for Circuits Switched and a second lu(PS) interface for Packet Switched of the GPRS. It is also connected to an Operation and Maintenance Centre (OMC). The RNC placed below can be a Drift D-RNC and is connected to the upper S-RNC by means of an lur interface. The UTRAN with the served UEs constitute a Radio Network Subsystem (RNS) disclosed in TS 23.110.

The GSM - BSS block includes a plurality of BTSs connected to a Base Station Controller BSC by means of an Abis Interface and to the UEs through an on-air Um interface. The BSC is interfaced to the Core Network CN by means of a Gb interface (packet switched) and is further connected to a Transcoder and Rate Adaptor Unit TRAU also connected to the Core Network CN through an A interface. It is also connected to an Operation and Maintenance Centre (OMC).

The CN network includes the following Network Elements: Switching Centre MSC / Visitor Location Register VLR, Gateway MSC GMSC, Interworking Function IWF / Transcoder TC, Camel Service Environment CSE, Equipment Identity Register EIR, Home Location Register HLR, Authentication Centre AuC, Serving GPRS Support Node SGSN, and Gateway GPRS Support Node GGSN. The following interfaces are visible inside the CN block: A, E, Gs, F, C, D, Gf, Gr, Gc, Gn, and Gi. The IWF block translates the lu(CS) interface into the A interface towards MSC / VLR block. The TC element performs the transcoding function for speech compression/expansion concerning UTRAN (differently from GSM where this function is performed outside the CN network) also connected to the MSC block through the A interface. The GMSC is connected to the MSC / VLR through the E interface and to a Public Switched Telephone Network PSTN and an Integrated Services Digital Network ISDN. Blocks CSE, EIR, HLR, AUC are connected to the MSC / VLR through, in order, the Gs, F, C, and D interfaces, and to the SGSN node through the Gf and Gr interfaces. The SGSN block is interfaced at one side to the S-RNC inside UTRAN block by means of the lu(PS) interface, and to the BSC inside the GSM-BSS block through the Gb interface. At the other side the SGSN node is interfaced to the GGSN node through the Gn interface. The last block is connected through the Gi interface to a packet data switching network of the IP (Internet Protocol) type and/or the X.25 type. The Core Network CN of fig.3 consists of an enhanced GSM Phase 2+, as described in TS 23.101, with a Circuit Switched CS part and a packet Switched part (GPRS). Another important Phase 2+ is the CAMEL (Customised Application for Mobile network Enhanced Logic) Application Part (CAP) used between the MSC and CSE for Intelligent Network (IN) applications. CAP is described in TS 29.078.

In operation, the MSC, so as the SGSN node, keep records of the individual locations of the mobiles and performs the safety and access control functions. More BSS and RNS blocks are connected to the CN Network, which is able to perform intrasystem handovers between adjacent RNSs or between adjacent BSSs, and intersystem handovers between a RNS and an adjacent BSS. UTRAN in respect of GSM further improves data service by making possible greater throughputs and the asymmetrical traffic typical of the Internet Protocol (IP). The network of fig.3, which only represents a minimal part of a world-wide network, shall allow the routing of a telephone call inside an International UMTS / GSM Service Area subdivided into National Service Areas. By way of the hierarchical structure of the network, each National Service Area is subdivided into the following nested domains of decreasing area: PLMN Service Area; MSC / SGSN Service Area; Location Area LA (CS-domain) uniquely defined by its LAI (Location Area Identity) code; Routing Area RA inside the SGSN Service Area as a partition of the CS Location Area; Cell Area where the UE is actually located in the radio coverage of a target Node B or BTS. Many known protocols described in the relevant standardization are deputed to govern the exchange of information at the various interfaces.

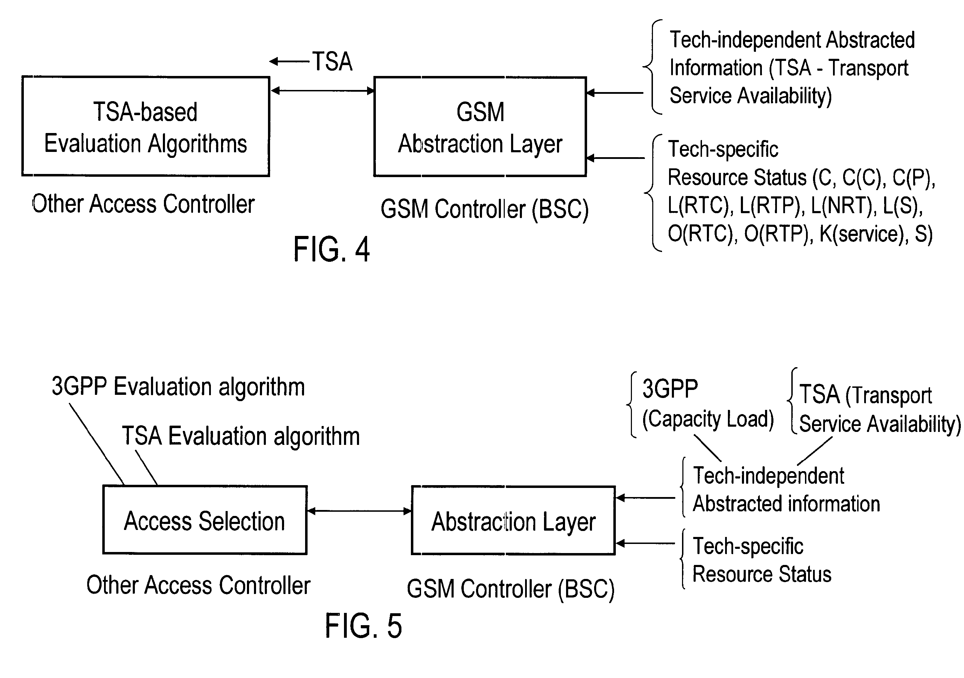

To the aim of the present invention the multi-RAT network of **fig.3** is a particular embodiment of the Ambient Network of **fig.1** whose controllers RNC and BSC are capable of handling TSA ALI calculated as will be described soon. More in particular, the functional blocks indicated in **figures 4** and **5** are mapped in the network of **fig.3****.**

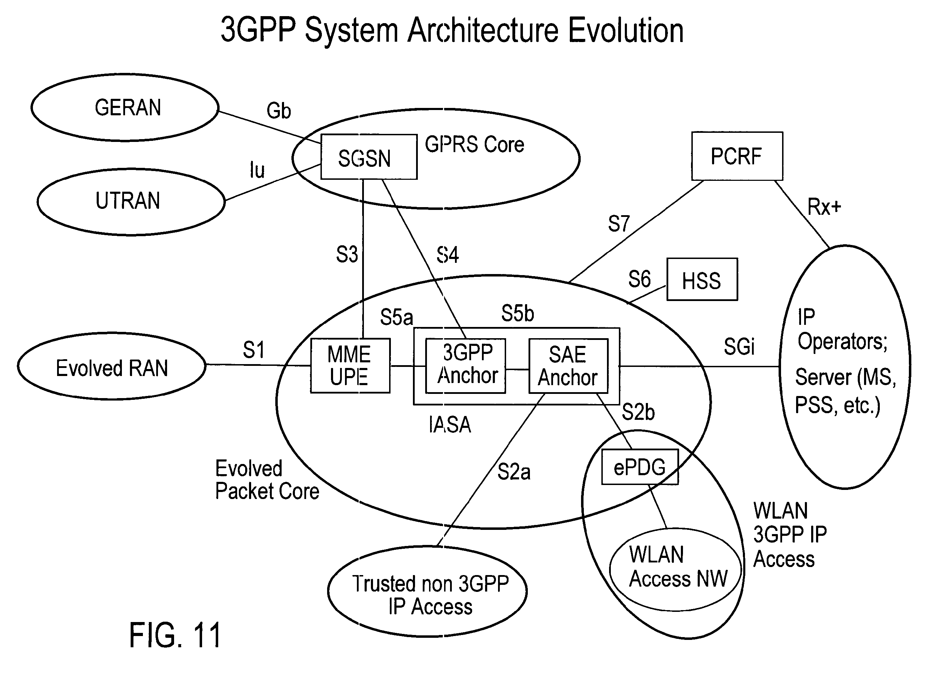

Referring also to **figures 11** to **13** for what concerns the SAE/LTE and WiMAX technologies, this figures being explained later in detail, we describe a method where different access technologies (including UTRAN, GERAN, LTE and WiMAX) totally or partially overlapping over a geographic area, or having respective neighbouring cells, are coordinated through their respective controllers (RNC, BSC, E-NodeB, BS, ...) for the sake of handovers, cell reselections and new service setups. The method is based on the calculation, exchange and evaluation of TSA information, including indication of the maximum user bitrate (MUB) and quantity (Q) that can currently be allowed to the single user for each service.

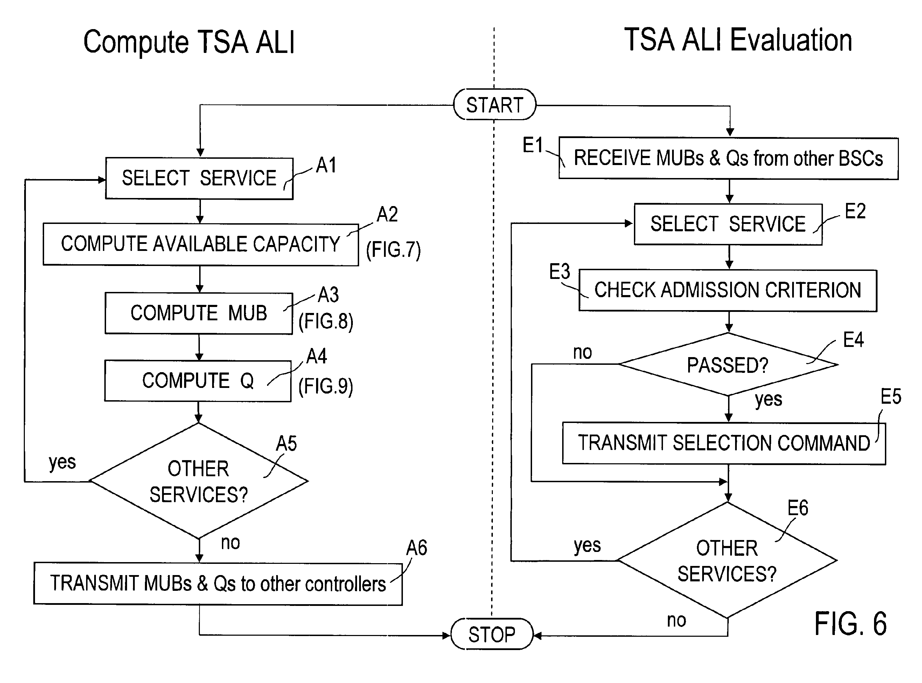

Now with reference to the **figures 6** to **9** a TSA ALI computation algorithm is described limitedly to the GSM case for the BSC, but this shouldn't constitute a bar for the skilled in the art in adapting the algorithm to the UTRAN or other RAT networks. Parallelly to the description of the TSA ALI computation algorithm a 3GPP ALI computation algorithm is described to the only aim of comparison between the twos and without dedicated figures.

We consider for GSM a number of transport service types including conversational circuit-switched services, Enhanced GPRS streaming services, non-real-time GPRS services and non-real-time Enhanced GPRS services. Also, we consider different service priorities for a portion of the described service types: in particular we consider as higher priority services the ones in handover, and as lower priority services any new service setup request.

We start describing the algorithm for computing the TSA information described in **fig.6** **(leftmost part).** For each service (**fig.6****,** steps A1 and A5), characterised by service type and service priority, we compute the available capacity (step A2), then we compute the MUB (step A3) and finally we compute the additional element Q (step A4) describing the quantity of available services at the bitrate indicated by MUB.

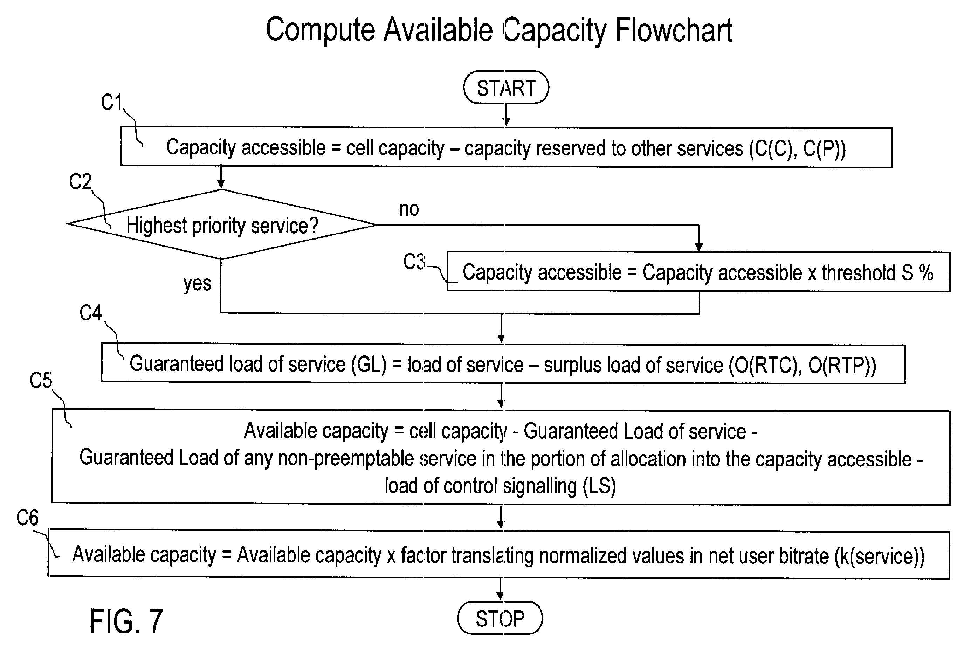

For computing the available capacity for a given service, we start by computing the accessible capacity to that service, which equals at first the total fixed cell capacity. However, when taking into account reserved capacities for different services, the accessible capacity for that service needs to exclude any capacity reserved to other services, for example resources reserved to circuit switched and/or packet switched services (**fig.7** step C1). In particular, reserved resources can be dynamically set in time according to policies, current resource usage and resource bookings.

Moreover, the accessible capacity is either all capacity accessible to the given service type for the highest service priority of that service, or a percentage of all capacity accessible to the given service type according to a respective load threshold set for lower service priorities (**fig.7** steps C2 and C3). When taking into account reserved capacities for different services, load thresholds for lower service priorities can be set on the reserved and shared capacities limiting the accessible capacity for those service priorities accordingly to a related portion.

Having computed the accessible capacity, its current occupation in terms of load needs to be considered. When there exist non-guaranteed resources given as a surplus resource to any service, the guaranteed load of any service needs to be computed as the current load in the portion required for providing a guaranteed Quality of Service, excluding any surplus resource currently allocated (**fig.7** step C4).

The available capacity for a given service is then computed (**fig.7** step C5) by taking the capacity accessible to the service and by subtracting to it the guaranteed load of that service and of any other service that cannot be pre-empted by that service. When taking into account reserved capacities for different services, the load of any other service that cannot be pre-empted by that service would be considered only in the portion of allocation into the capacity accessible to that service. Finally, when taking into account additional control signalling load, the available capacity for a given service would need not to include the capacity allocated for control signalling in the portion of allocation into the capacity accessible to that service.

The available capacity, together with the accessible capacity and the load of different services, can be computed in a number of ways, for example as a bitrate indication or a pure number. When computing it as a bitrate indication a normalisation criteria is required: for example for any service the capacity available can be computed first as a gross normalised bitrate as if the capacity available would be used by a reference service (e.g. voice), and only in a second step the capacity available can be expressed as net user bitrate through a conversion factor (**fig.7** step C6).

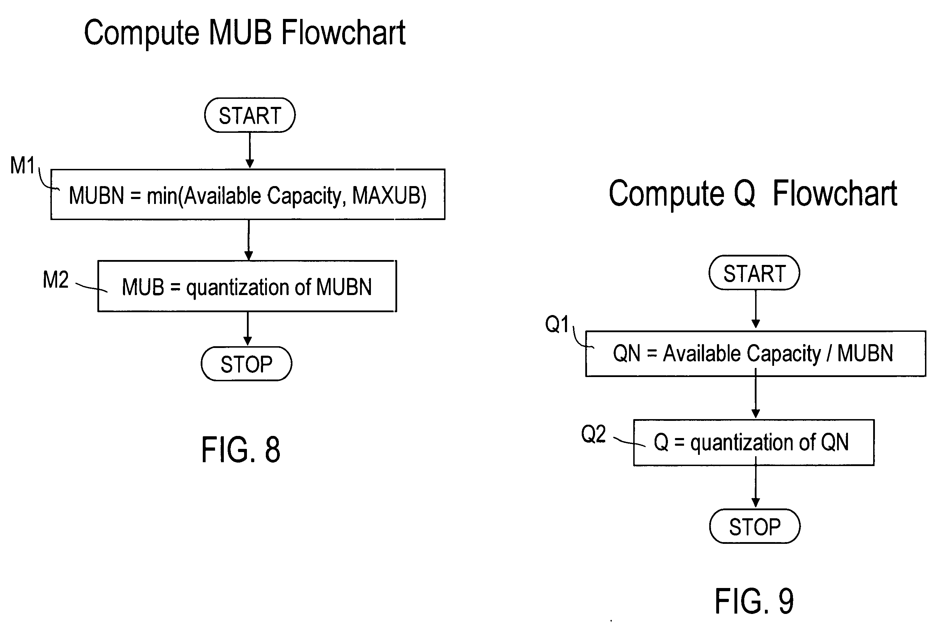

Once computed the available capacity for a given service, taking into account the maximum capacity MAXUB allowed to the single user for that service as a configuration setting, the algorithm needs to compute MUBN as the minimum between the available capacity and MAXUB (**fig.8** step M1). In particular, MAXUB can be dynamically set in time as a function of the available capacity. The algorithm then computes for the given service the TSA parameter MUB as a quantized representation of MUBN, for the sake of transmission over digital transmission means (**fig.8** step M2). This can be done in a number of ways, e.g. by taking the integer part of MUBN, or by taking the nearest power of two raised at an integer n.

Once computed MUB, and in particular MUBN, the algorithm computes QN describing the number of available services of bitrate MUBN as the ratio between the available capacity and MUBN (**fig.9** step Q1). Finally the algorithm computes for the given service the TSA parameter Q as a quantized representation of QN, for the sake of transmission over digital transmission means (**fig.9** step Q2). This can be done e.g. through thresholds on QN distinguishing a number of quantity levels.

When TSA is computed for each service of interest in terms of MUB and Q, this information is passed to other access controllers (**fig.6** step A6), which on need will use this information for performing access selection for a given service (**fig.6** step E1).

With regards to the access selection algorithms, **fig.6** **(rightmost part)** describes the undertaken steps. First of all, a service is selected (**fig.6** step E2) for which an access selection decision needs to be taken, based e.g. on handover/cell reselection needs, new service requests and load management needs.

Regarding the access selection criterion (**fig.6** step E3) there exist two cases: the case where a single cell is evaluated as a potential target, and the case where two or more cells are compared as potential targets. In both cases the algorithms need to take the TSA information corresponding to that service. In the former case the algorithm needs then to check if the MUB information indicates the availability of the required bitrate for that service, in which case the cell is a suitable target cell. In the latter case instead the algorithm needs then to check if the MUB information indicates the availability of the required bitrate for that service in each cell, in which case the cells satisfying this requirement are suitable target cells, and if required finally check the Q information element of the different suitable target cells for selecting the cell with highest Q as the best target cell.

If a target cell could be selected (**fig.6** step E4), a selection command is transmitted (**fig.6** step E5), triggering e.g. handover/cell reselection requests of service setup requests towards the target cell. Concluding, the algorithm may be repeated for any additional service requiring access selection (**fig.6** step E6).

### General assumptions

- UUDL: in general, similar parameters and characteristics apply for uplink and downlink. For simplicity we refer e.g. to only DL for calculation and evaluation of the TSA, although similar work should be done for UL. Also, an aggregated figure could be obtained for UL and DL by combining the TSA for UL and DL.
- there exist resources reserved for different services (voice, GPRS) and priorities (voice handover), and/or vendor specific thresholds (e.g. new calls will be accepted only under 75% load). We assume for simplicity that for each service dedicated (reserved) resources are filled first, i.e. that the system can be configured as such.
- there exists a varying capacity occupied by signalling and other overheads (broadcast channels, coding, signalling for call setup, ...)
- there exist surplus resources, i.e. resources that are given to the user as a surplus, i.e. above the guaranteed bitrate, under favourable conditions. This exists only for RT services, as for NRT nothing is guaranteed. E.g. it considers the allocation of full-rate codecs or high-quality AMR codecs, that can be given under favourable load conditions, but which availability cannot be guaranteed.
- there exist different classes of terminals with different values for max throughput that can be provided to the user. Also, due to particular interference conditions, different terminals may adopt more or less favourable coding schemes. Still, we don't use these assumptions because the described realization of TSA is agnostic of the specific user exploiting the service.

### DEFINITION OF ABSTRACTED RESOURCES

### GSM Resource Status (RS)

The following characterization is defined in order to build the abstraction layers on something concrete. The information elements presented have the following requirements:
- They need to represent technology-specific resource abstractions.
- They need to significantly describe the status of the resources.
- They need to be obtainable, i.e. it must be possible to calculate them through specific modules.

We characterize GSM resource status (RS) as follows:
- C: a total fixed capacity, depending on the number of TRX/channels, in normalised kbit/s (normalised for a typical channel, e.g. voice under normal conditions - gross occupancy) [182.4 .. 8755.2 kbit/s]
- C(C), C(P): set of resources reserved to circuit (C) and packet (P) services [0 .. 8755.2 kbit/s]
- L: load parameter in normalised kbit/s indicating the gross total occupancy [0 .. 8755.2 kbit/s]
- L(RTC): load parameter in normalised kbit/s indicating the gross occupancy due to circuit RT services (voice) [0 .. 8755.2 kbit/s]
- L(RTP): load parameter in normalised kbit/s indicating the gross occupancy due to packet RT services (streaming) [0 .. 8755.2 kbit/s]
- L(NRT): load parameter in normalised kbit/s indicating the gross occupancy due to (packet) NRT services [0 .. 8755.2 kbit/s]
- L(S): load parameter in normalised kbit/s indicating the gross occupancy due to overheads including call signalling, L2 overheads and other overheads (BCCH, ... overhead not yet included in other parameters L(RTC), L(RTP), L(NRT)). [0 .. 8755.2 kbit/s]
- K(service): parameter indicating for every service the ratio between the net kbit/s of the user service (maximum for the best case, while possible) and the gross normalised kbit/s of the same service [k(service)].
   o k(conv) = 13 / 22.8 = 0.570
   o k(str) = 59.2 / 22.8 = 2.596
   o k(GPRS NRT) = 21.4 / 22.8 = 0.939
   o k(EGPRS NRT) = 59.2 / 22.8 = 2.596
- O(RTC): load parameter in normalised kbit/s indicating within L(RTC) the gross occupancy due to SURPLUS RT circuit services [0 .. 8755.2 kbit/s]. O(RTC)<L(RTC)
- O(RTP): load parameter in normalised kbit/s indicating within L(RTP) the gross occupancy due to SURPLUS RT packet services [0 .. 8755.2 kbit/s]. O(RTP)<L(RTP)
- S: load threshold above which the system does not accept requests for new guaranteed services (e.g. 0.75 (75%)).

3GPP ALI (it is only used for the comparison with TSA ALI)
From 3GPP specifications, abstracted load information is characterized as follows:
- UL CCC: cell capacity class [1..100]
- DL CCC: cell capacity class [1..100]
- UL LV: load value [0..100] (linear, percentage of capacity)
- DL LV: load value [0..100]
- UL RTLV: RT load value [0..100] (linear, RT percentage of load value)
- DL RTLV: RT load value [0..100]
- UL NRTLI: NRT load indication [0..3] (low, medium, high, overload)
- DL NRTLI: NRT load indication [0..3]

### TSA ALI (GSM)

We characterize abstracted load information in terms of "Transport Service Availability" (TSA), defined as follows:
- UL/DL information may be communicated separately or jointly.
- conversational TSA
- EGPRS streaming TSA
- GPRS NRT TSA
- EGPRS NRT TSA
- TSA includes: 1 bit for priority (high = 1, any = 0); 5 bits for max user bitrate according to a table, 1 bit for a quantity indicator (few / many).

### ABSTRACTION LAYER ALGORITHMS

Abstraction layer algorithms are given for both 3GPP ALI and TSA ALI.

These algorithms are candidate for inclusion in the GLL Abstraction Layer, or in the abstraction layers below the ACS in general.
Algorithms GSM RS → 3GPP ALI (it is only used for the comparison with TSA ALI) Assumption:
MPL = 0.95 (maximum planned load as a fraction of the maximum capacity).
Algorithms:
CCC = C / 182.4 (in this way CCC will go from 1 to 48, allowing other technologies to go further up)
LV = (L / (C x MPL)) x 100
L(RT) = L(RTC) + L(RTP)
RTLV = (L(RT) / L) x 100
NRTOCC = L(NRT) / (C - L(RT) - L(S))
NRTLI = 0 [NRTOCC < 0.3]; 1 [NRTOCC < 0.6]; 2 [NRTOCC < 0.9]; 3 [NRTOCC ≥0.9].
Algorithms GSM RS → TSA ALI (GSM) (is part of the invention)
Assumptions:
prio = priority
MAXUB(service, prio) = maximum capacity that the system can give to a single user as a configuration setting. It may be allowed to vary depending on load condition (e.g. the higher the load, the smaller MAXUB)
CATS(service, prio) = Considerable Amount of Transport Services: threshold on the number of transport services determining discrimination between availability in quantity "few" or "many" for the same transport service. E.g. CATS = 2.

### Algorithms:

With reference to **fig. 6** **(leftmost part),** the TSA ALI computation algorithm starts with the execution of step A1 in which one out of n foreseen services is selected; in the successive step A2 the Available Capacity is calculated as will be illustrated in **fig.7****.** The sequential steps A3 and A4 are devoted to computation of MUB (**fig.8**) and Q (**fig.9**) parameters: MUB is the maximum capacity that the system can give to a single user according to Cavail and configuration settings. MUB can be expressed as an integer: note that an integer value already represents a quantization of a real value. In real messaging, it would need to be coded in a more compact format, e.g. by using n, where 2 at the power of n would indicate the approximate maximum user bitrate. Quantity QN indicates the available number of described bearers or transport services, while Q is a quantized description of QN indicating e.g. whether few (0) or many (1) of the described bearers are available. In the next step A5 the computation is iterated to the other services. When all services are completed, the BSC transmits MUB and Q Information Elements (IE) to other controllers in step A6. Alternatively, the transmission might be executed inside the loop.

With reference to **fig.7****,** for any service and prio the Available Capacity is calculated as indicated in steps C1 to C6 described hereafter for the various services:

```
 */for all services /*
 GL(RTC) (Guaranteed L(RTC)) = L(RTC) - O(RTC)
 GL(RTP) = L(RTP) - O(RTP)
 GL(RT) = GL(RTC) + GL(RTP)
 */ conversational /*
 if GL (RTP) < C(P)
 Cavail(conv, any prio) = (C - C(P) - GL(RTC) - L(S)) x k(conv)
 else Cavail(conv, any prio) = (C - GL(RT) - L(S)) x k(conv)
 if GL(RT)/C > S ≥Cavail(conv, prio 0) = 0
 */ streaming /*
 if GL(RTC) < C(C)
 Cavail(str, any prio) = (C-C(C)-GL(RTP)-L(S)) x k(str)
 else Cavail(str, any prio) = (C-GL(RT) - L(S)) x k(str)
 if GL(RT)/C > S → Cavail(str, prio 0) = 0
 */ NRT /*
 if GL(RTC) < C(C)
 Cavail(NRT) = C-C(C) - GL(RTP)-L(NRT) - L(S)
 else Cavail(NRT) = C-GL(RT) - L(NRT)-L(S)
 Cavail(GPRS NRT, any prio) = Cavail(NRT) x k(GPRS NRT)
 Cavail(EGPRS NRT, any prio) = Cavail(NRT) x k(EGPRS NRT).
     With reference to fig.8 and fig.9, for any service and prio,
 if Cavail(service, prio) ≥MAXUB(service, prio) then {
 MUBN(service, prio) = MUB(service, prio) = MAXUB(service, prio);
 QN = Cavail(service, prio) / MAXUB(service, prio);
 if QN > CATS(service, prio) then Q(service, prio) = 1 else Q(service, prio) = 0;}
 else {
 MUBN = Cavail(service, prio);
 MUB(service, prio) = int (MUBN);
 QN(service, prio) = Q(service, prio) = 0;}
 endif
```

### ALI EVALUATION ALGORITHMS

Algorithms are given for both 3GPP ALI and TSA ALI.

These algorithms are candidate for inclusion in MRRM, or in access selection algorithms within the ACS in general.
3GPP ALI evaluation algorithm (it is only used for the comparison with TSA ALI). Input variables: service, 3GPP ALI info of candidate target cells
Note: the (100 - Cell_Load) x Cell_Capacity_Class gives the absolute free capacity in the cell. This is what needs to be compared in order to decide the best cell load-wise, in order to take into account different cell sizes.
Note: thresholds mechanisms are not included because we assume LV is relative to "the maximum planned load".

We do not make straight connection between CCC and kbit/s because it was not meant by the 3GPP solution to do so.
service: conversational RT, streaming RT, GPRS NRT, EGPRS NRT;

```
 if there is only one candidate target cell
 ranking = 0 (i.e. service cannot fit in)
 if (service = RT and LV < 100) ranking = 1 (i.e. service can fit in)
 if (service = NRT and NRTLI < 3) ranking = 1
 if there are two candidate cells (1, 2) to be compared
 ranking(1) = 0;
 ranking(2) = 0;
 freecapacity:
 FC(1) = (100-LV(1)) x CCC(1);
 FC(2) = (100-LV(2)) x CCC(2);
 if (service = RT)
 if FC(1) ≥FC(2) and FC(1) > 0 then
  ranking(1) = 1;
  else
  if FC(2) > 0 then ranking(2) = 1;
 endif
 endif
 if (service = NRT)
 if NRTLI(1) ≤NRTLI(2) and NRTLI(1) < 3 then
  ranking(1) = 1;
  else
  if NRTLI(2) < 3 then ranking(2) = 1;
 endif
 endif
```

### TSA ALI evaluation algorithm (is part of the invention)

With reference to **fig. 6** **(rightmost part),** the TSA ALI Evaluation algorithm starts with the execution of step E1 in which MUBs and Qs IEs transmitted by other BSCs are received. The successive steps E2 to E6 is a loop to check for each service the access selection criterion and, if passed, transmit an access selection command for that service towards a target cell. In the following the TSA ALI Evaluation algorithm is better detailed. Input variables: service, prio, bitrate, TSA ALI info of candidate target cells

```
 if there is only one candidate target cell
 if MUB(service, prio) ≥bitrate then ranking = 1; else ranking = 0;
 if there are two candidate cells (1, 2) to be compared:
 ranking(1) = 0;
 ranking(2) = 0;
 if Quantity(1, service, prio) ≥Quantity(2, service, prio) and MUB(1, service, prio) ≥bitrate
 then
 ranking(1) = 1;
 else
 if MUB(2, service, prio) ≥bitrate then ranking(2) = 1;
 endif.
```

### EVALUATING TSA vs. 3GPP ALI PERFORMANCES (calculates the curves of fig.10)

Now 3GPP and TSA approaches are compared within a scenario characterized by a single target cell, where a controller has to decide if a given service fits or not in the target cell based on the ALI.

The comparative evaluation algorithm provides estimation of the difference in admission control success rate implied by use of 3GPP ALI vs. TSA ALI. By performing the evaluation for different values of minimum cell load, we obtain curves. The method is rather fast, since each RS configuration is considered only once.

The comparative algorithm does not emulate variations in the RS that could allow measuring the effects of aged information on both 3GPP ALI and TSA ALI. However, results show that TSA performs better then capacity/load even when generation and evaluation of the abstractions are done simultaneously.

Variables and parameters considered in the evaluation includes: Service type; Resource status.

### Service type

The following service types are considered:
1. Conversational, MUB =13 kbit/s (Max User Bitrate), prio = 1 (e.g. handover)
2. Conversational, MUB =13 kbit/s, prio = 0 (e.g. new service request)
3. EGPRS streaming, MUB = 59.2 kbit/s, prio = 1
4. EGPRS streaming, MUB = 59.2 kbit/s, prio = 0
5. GPRS NRT, MUB = 21.4 kbit/s
6. EGPRS NRT, MUB = 59.2 kbit/s

### Resource Status (RS)

The RS Information elements: C, C(C), C(P), L, L(RTC), L(RTP), L(NRT), L(S), K(channel), O(RTC), O(RTP) and S have been already defined.

### Setting GSM RS parameters and variable limits

In the following, we assign values to GSM RS parameters and variable limits. Parameters:
- TRX = 182.4 kbit/s
- C = 5 x TRX kbit/s
- C(C) = 2 x TRX kbit/s
- C(P) = 1 x TRX kbit/s
- K(channel):
   o k(conv) = 13 / 22.8 = 0.570
   o k(EGPRS str) = 59.2 / 22.8 = 2.596
   o k(GPRS NRT) = 21.4 / 22.8 = 0.939
   o k(EGPRS NRT) = 59.2 / 22.8 = 2.596
- S = 0.75
- Sigmin = 0.04
- Sigmax = 0.08
- Op = 0.5
- Step = 8 kbit/s
- StepSig = 0.01
- Lmin: 60% = 0.6*C = 1094.4 kbit/s (we emulate loaded situations only, therefore the overall load ≥Lmin)
Variable limits:
- L [C x Lmin .. C kbit/s]
- L(RTC) [0 .. (C - C(P)) kbit/s]
- L(RTP) [0 .. (C - C(C)) kbit/s]
- L(NRT) [0 .. (C - C(C)) kbit/s]
- L(S) [Sigmin x L .. Sigmax x L kbit/s]
- O(RTC) [0 .. Op x L(RTC)]
- O(RTP) [0 .. Op x L(RTP)]

### COMPARATIVE EVALUATION ALGORITHM

This algorithm goes through each configuration of interest for the RS and performs evaluation.

```
 Count = 0;
 Errcount(..) = 0;
 Cc = C-C(P);
 For L(RTC) = 0 to Cc step = Step
 { Coc = Op x L(RTC);
 Cp = min (C-C(C), C-L(RTC));
 For O(RTC) = 0 to Coc step = Step
 { For L(RTP) = 0 to Cp step = Step
   Cop=Op x L(RTP);
  { For O(RTP) = 0 to Cop step = Step
    { Lrt = L(RTC) + L(RTP);
      Cnrt= Cp - L(RTP);
      For L(NRT) = 0 to Cnrt step = Step
      { Lt = Lrt + L(NRT);
       For Sig = Sigmin to Sigmax step StepSig
       { L(S) = Lt x Sig;
         L = Lt + L(S);
         if L ≤C and Lmin < L
         { Count = Count + 1;
           For any service:
           { Errcount(service) = Errcount(service) + XOR (ALlevaluation(service,
 3GPP ALI (RS)), ALlevaluation(service, TSA ALI (RS));}}}}}}}}.
```

The next **figures 11****,** **12,** and **13** report some future 3GPP and WiMAX network architectures candidate to host the present invention.

With reference to fig.**11**, 3GPP System Architecture Evolution (SAE) is a recent architectural development for the 3GPP system reported as a feasibility study in 3GPP TR 23.882 v1.9.0, "3GPP System Architecture Evolution: Report on Technical Options and Conclusions (Release 7)", March 2007.

SAE is composed by an Evolved Packet Core (EPC) that connects to several access networks, other core networks (including the legacy GPRS core network) and external elements. External elements include Policy and Charging Rules Function (PCRF, interface S7), Home Subscriber Server (HSS, interface S6), Operator IP Services or external Packed Data Networks (interface SGi). In particular, EPC connects to several access networks including Evolved RAN (also called LTE RAN, interface S1), trusted non-3GPP IP access including trusted fixed IP access (interface S2a), VVLAN access network. Within the EPC, the Mobility Management Entity (MME) and User Plane Entity (UPE) connect to the Evolved RAN (interface S1), the enhanced Packet Data Gateway (ePDG) connects to the VVLAV access network, while the inter Access System Anchor (IASA) connects to trusted non-3GPP IP access (interface S2a) and external Packet Data Networks (interface SGi). Regarding the elements within EPC, MME/UPE connects to IASA through interface S5a, IASA connects to ePDG through interface S2b. IASA is formed by the two additional elements 3GPP Anchor and SAE Anchor connected through S5b. EPC and GPRS Core networks may be interconnected in several ways (interfaces S3 and S4), for example through MME/UPE or through IASA. It should be noted that the presented SAE architecture is not the finalized architecture model for the evolved system, i.e. it does not contain all functions/interfaces required, and some functions/interfaces may be added, deleted or modified in the course of the key issue discussions within 3GPP.

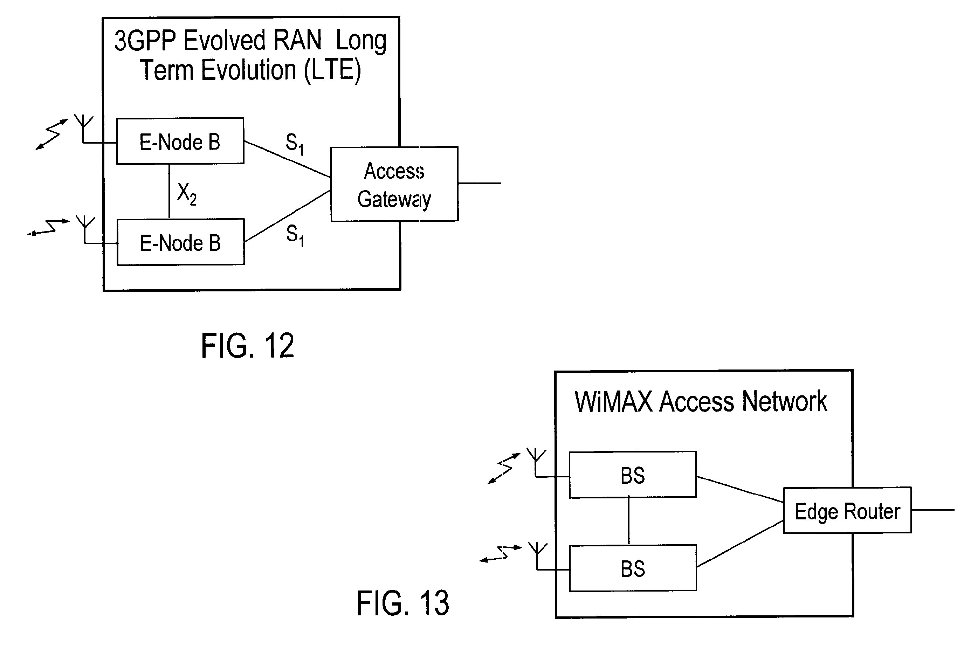

With reference to fig.**12**, 3GPP Evolved RAN, or Long Term Evolution (LTE) RAN, or evolved UTRAN (E-UTRAN), is a recent architectural development for future 3GPP radio access networks, described in 3GPP TR25.813 v710. The LTE RAN is composed by Enhanced-NodeBs (E-NodeBs), directly interfacing to user terminals through antennas, connected to each other through interface X2, and connected to the EPC and in particular to an access Gateway through the interface S1 already described.

With reference to fig.**13**, the WiMAX Access Network is another access network being described in the IEEE 802.16 protocol suite and in documents originated by the WiMAX Forum. The WiMAX Access Network is composed by Base Stations (BS), directly interfacing to user terminals through antennas, possibly connected to each other through respective interfaces, and connected to the Edge Router (also called Broadband Remote Access Server) through a respective interface. The WiMAX Access Network can connect to the 3GPP system via a Packet Data Gateway, ePDG or through an external Packet Data Network like the Internet.

In particular, TSA information along with its elements MUB and Q can be exchanged between entities such as E-NodeB, Access Gateway, MME/UPE, IASA, EPC, GPRS Core, BS, Edge Router and the controllers of any access network on the respective interfaces. For a GSM cell, TSA information can be exchanged between GERAN, GPRS Core and EPC, towards any relevant controller.

### USED ACRONYMS

- 3GPP: 3^{rd} Generation Partnership Program
- ACS: Ambient Control Space
- ALI: Abstracted Load Information
- AMR: Adaptive Multi-Rate
- AN: Ambient Network
- ANI: Ambient Networks Interface
- ARI: Ambient Resource Interface
- ASI: Ambient Service Interface
- BCCH: Broadcast Control CHannel
- BS: Base Station
- BSC: Base Station Controller
- CS: Circuit Switched
- DL: Downlink
- E-NodeB: Enhanced NodeB
- e-PDG: Packet Data Gateway
- EGPRS: Enhanced GPRS
- EPC: Evolved Packet Core
- FC: Free Capacity
- GERAN: GSM EDGE Radio Access Network
- GLL: Generic Link Layer
- GPRS: General Packet Radio Service
- GSM: Global System for Mobile communications
- HP: High Priority
- HSS: Home Subscriber Server
- HTTP: Hyper Text Transfer Protocol
- IASA: Inter Access System Anchor
- IE: information Element
- IEEE: Institute of Electrical and Electronics Engineers
- IMS: IP Multimedia Subsystem
- IP: Internet Protocol
- IST: Information Society Technologies
- LP: Low Priority
- LTE: 3GPP Long Term Evolution
- MME: Mobility Management Entity
- MPL: Maximum Planned Load
- MRRM: Multi-Radio Resource Management
- NRT: Non Real Time
- NRTLI: Non Real Time Load Information
- NSN: Nokia Siemens Networks
- NW: Network
- PCRF: Policy and Charging Rules Function
- PS: Packet Switched
- PSS: Packet-Switched Streaming service
- QoS: Quality of Service
- RA: Routing Area
- RAN: Radio Access Network
- RAT: Radio Access Technology
- RNC: Radio Network Controller
- RRM: Radio Resource Management
- RS: Resource Status
- RT: Real Time
- SAE: 3GPP System Architecture Evolution
- SGSN: Serving GPRS Support Node
- TRX: Transceiver
- TSA: Transport Service Availability
- UE: User Equipment
- UL: Uplink
- UMTS: Universal Mobile Telecommunication System
- UPE: User Plane Entity
- UTRAN: Universal Terrestrial Radio Access Network
- WiMAX: Worldwide Interoperability for Microwave Access
- WLAN: Wireless Local Area Network

### REFERENCES

[1] http//www.ambient.networks.org
[2] N. Niebert, A. Schieder, H. Abramowicz, G. Malmgren, J. Sachs, U. Horn, C. Prehofer, and H. Karl. Ambient Networks - An Architecture for Communication Networks Beyond 3G. IEEE Wireless Communications, 11(2):14-21, Apr. 2004.
[3] Deliverable D-1.5, "AN Framework Architecture", December 2005.
[4] P. Magnusson, F. Berggren, I. Karla, R. Litjens, F. Meago, H. Haitao, R. Veronesi, "Multi-radio resource management for communication networks beyond 3G,". IEEE 62nd VTC (2005).

## Claims

1. Radio resource management method in a mobile radio communication network employing different radio access technologies (UTRAN, GERAN, LTE, WiMAX) that overlap over a geographic area subdivided into cells belonging to the domains of respective controllers (RNC, BSC, E-NodeB, BS), including the following steps carried out by every controller for each controlled cell:
d) calculating a transport service availability information element, called hereafter MUB, describing the availability of transport services in terms of maximum user bitrate that can currently be allowed to each transport service, separately for uplink and downlink, needed to plan usage of radio resources in the current and neighbouring cells, such as for handovers, cell reselections and new service setups;
e) including said MUB information elements into management messages forwarded to the other controllers, either of the same or different technologies;
f) checking said MUB information elements coming from the other controllers (BSC, RNC, E-NodeB, BS) in order to decide on the most suited target cell, among the current and neighbouring cells, for resource management issues such as handover, cell reselection, and new service setup;
**characterised in that** said calculating step a) includes in its turn the following steps executed for each implemented service **characterised by** service type and high/low priority:
a1) calculating an available capacity for a given service by taking a normalised capacity accessible to said service and by subtracting to it a normalized load of said service and of any other service that cannot be pre-empted by said service;
a2) calculating a MUBN parameter for said service as the minimum between said available capacity and the maximum capacity MAXUB allowed to the single user for said service as a configuration setting;
a3) calculating a quantized representation MUB of the MUBN for said service for transmission over digital transmission means.

2. The method of claim 1, **characterized in that** said calculating step a) further includes for said service the steps of:
a4) calculating a parameter QN associated to MUB for said service and describing the number of available services of bitrate MUBN as the ratio between the available capacity and MUBN;
a5) calculating a parameter Q associated to MUB for said service as a quantized representation of QN for transmission over digital transmission means.

3. The method of claim 1, **characterized in that** in said step a1) the accessible capacity is either:
- all capacity accessible to the given service type for the highest service priority of said service or
- a percentage of all capacity accessible to the given service type according to a respective load threshold set for lower service priorities.

4. The method of claim 1, **characterized in that** said step a1) further includes the steps of:
- calculating the capacity accessible to said service by taking the total fixed cell capacity and by subtracting to it any capacity reserved to other services;
- considering the load of any other service that cannot be pre-empted by said service only in the portion of allocation into the capacity accessible to said service.

5. The method of claim 1, **characterized in that** said step a1) further includes subtracting the capacity allocated for control signalling in the portion of allocation into the capacity accessible to said service.

6. The method of claim 1, **characterized in that** said step a1) further includes considering the load of said service and of any other service that cannot be pre-empted by said service only in the portion required for providing a guaranteed Quality of Service, excluding any surplus resources currently given to said services.

7. The method of claim 1, **characterized in that** in said step a1) further includes using a conversion factor for translating normalised values of available capacity in net user bitrate indications of the same available capacity.

8. The method of claim 1, **characterized in that** in said step a2) further includes dynamically set in time the MAXUB as a function of the available capacity for the same service.

9. The method of claim 4, **characterized in that** further includes dynamically set in time said reserved capacities according to policies, current resource usage, resource bookings.

10. The method of claim 3 and 4, **characterized in that** further includes setting load thresholds on the reserved capacities for limiting access to the same capacities to a related portion, limiting **in that** the capacity accessible for lower service priorities.

11. The method of any claim from 1 to 10, **characterized in that** said MUB concerns conversational circuit-switched services.

12. The method of any claim from 1 to 10, **characterized in that** said MUB concerns Enhanced GPRS streaming services.

13. The method of any claim from 1 to 10, **characterized in that** said MUB concerns non-real-time GPRS services.

14. The method of any claim from 1 to 10, **characterized in that** said MUB concerns non-real-time Enhanced GPRS services.

15. The method of any claim from 1 to 10, **characterized in that** said MUB concerns low priority services.

16. The method of any claim from 1 to 10, **characterized in that** said MUB concerns high priority services.

17. The method of claim 1, **characterized in that** when a cell is evaluated as a potential target for a given service, said checking step c) includes in its turn the following steps:
c1) selecting for said cell the MUB information corresponding to said service;
c2) checking if the MUB information indicates the availability of the required bitrate for said service, in which case the cell is a suitable target cell.

18. The method of claim 2, **characterized in that** when two or more cells are compared as a potential target cells for a given service, said checking step c) includes in its turn the following steps:
c1) selecting for said cells the MUB information corresponding to said service;
c2) checking if the MUB information indicates the availability of the required bitrate for said service, in which case the cells satisfying this requirement are suitable target cells;
c3) checking the Q information element associated to said MUB information of different suitable target cells and selecting the cell with highest Q as the best target cell.
